(19) Europäisches Patentamt
European Patent Office
Office européen des brevets

(11) **EP 2 088 126 B1**

(12) **EUROPEAN PATENT SPECIFICATION**

(45) Date of publication and mention
of the grant of the patent:
**18.11.2015 Bulletin 2015/47**

(51) Int Cl.:
*C01G 9/02* (2006.01)     *B32B 17/10* (2006.01)
*C08K 3/22* (2006.01)     *C08L 101/00* (2006.01)
*C09D 7/12* (2006.01)     *C09D 11/00* (2014.01)
*C09C 1/04* (2006.01)

(21) Application number: **07828424.7**

(22) Date of filing: **26.09.2007**

(86) International application number:
**PCT/JP2007/068678**

(87) International publication number:
**WO 2008/044469 (17.04.2008 Gazette 2008/16)**

(54) **ULTRAFINE ZINC OXIDE PARTICLE AND PROCESS FOR PRODUCTION THEREOF**

ULTRAFEINES ZINKOXIDTEILCHEN UND HERSTELLUNGSVERFAHREN DAFÜR

PARTICULE ULTRAFINE D'OXYDE DE ZINC ET SON PROCÉDÉ DE PRODUCTION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.10.2006 JP 2006275654**

(43) Date of publication of application:
**12.08.2009 Bulletin 2009/33**

(73) Proprietor: **SAKAI CHEMICAL INDUSTRY CO., LTD.**
**Osaka 590-8502 (JP)**

(72) Inventors:
• **UEDA, Emi**
**Sakai-shi**
**Osaka 5900985 (JP)**
• **KOBAYASHI, Keita**
**Sakai-shi**
**Osaka 5900985 (JP)**
• **NAKAHARA, Shinji**
**Sakai-shi**
**Osaka 5900985 (JP)**

(74) Representative: **Hart-Davis, Jason et al**
**Cabinet Beau de Loménie**
**158, rue de l'Université**
**75340 Paris Cedex 07 (FR)**

(56) References cited:
EP-A1- 1 112 964     JP-A- 09 188 517
JP-A- 2002 226 826     JP-A- 2003 054 947
JP-A- 2004 124 033     US-A1- 2006 167 138

**Description**

BACKGROUND ART

Recently, environmental issues have increasingly drawn attention. Especially, in order to prevent global warming, energy saving, for example, by reducing electric consumption in air conditioning, has been studied. As one of positive methods to promote the energy saving, shielding of heat ray in sunlight has been studied to suppress the temperature increase in a space such as a house or a vehicular interior.

About 50% of total energy of sunlight is the energy from infrared rays. The energy of infrared ray itself is as low as one tenth of that of ultraviolet ray. However, infrared rays bring high thermal effect in the entire sunlight energy. Therefore, shielding infrared ray is required to accomplish the above-mentioned purpose. Particularly, windows of building, vehicular windows, telephone boxes, and the like are required to shield infrared rays coming in the inside spaces through transparent materials such as glass. To shield infrared rays, it is necessary either to absorb and thermally diffuse infrared ray or to reflect infrared ray.

However, if shielding material for infrared ray simultaneously shields even visible light, interior spaces may become dark and visibility in the spaces may be deteriorated. Therefore, a material for shielding infrared ray should be transparent to visible light. For such a reason, a material which can transmits visible light but reflects or absorbs infrared rays has been demanded. Additionally, such a material is desirably a particle-dispersion type material since it is widely applicable for various purposes and is advantageous in view of the production equipment and cost.

On another hand, demands for a conductive metal oxide material having conductivity have been increased in recent years. The material may be further required to have transparent to visible light depending on its the uses. Thus, a material which transmits visible light but reflects or absorbs infrared rays has been demanded. The conductive metal oxide material shields infrared ray. Thus, if the material having a transparent characteristic to visible light is produced, the material satisfies both demands for infrared shielding and for visible-light transmitting.

Previously proposed heat ray shielding materials and conductive materials include metal-evaporated films, organic additives, or inorganic (semi)conductors. However, the metal-evaporated films has drawbacks such as less transparency of visible light, poor durability, and high cost of apparatuses for producing the film (See Patent Documents 1 to 5). Organic additives have also a drawback in low weather resistance. Further, the organic additives takes advantage of absorption attributed to vibration movement of molecules for shielding infrared ray. Thus, heat radiation as heat energy is caused again after the absorption (See Patent documents 6 and 7). Further, carbonate salts of various kinds of metals are also employed based on utilization of the heat ray absorption by thermal stretching and vibration of carbonyl groups. However, the carbonate salts also have an essential drawback of the narrow absorption wavelength range.

As inorganic (semi)conductive materials, tin-doped indium oxide (ITO) and antimony-doped tin oxide (ATO) have been mainly studied in these years. Particularly, ITO is a promising material as a transparent heat ray shielding material, and has actually been utilized. Until now, a number of studies on ITO as a transparent conductive film have been actively made. As a result, ITO has been utilized in various fields of electronic materials such as FPD (Flat Panel Display) materials and touch panel materials. It has been known that ITO has optical characteristics such as infrared ray shielding ability together with such electric characteristics. The optical characteristics are regarded as byproducts of the electric characteristics and vice versa. When ITO has electric conductivity, it simultaneously has the heat ray shielding property. However, since indium is expensive, a substitute material has been demanded. With respect to ATO, the toxicity of antimony may cause a problem.

On another hand, methods of shielding near infrared ray by resin coatings containing metal-doped zinc oxide, ITO, or ATO have also been studied (See Patent documents 8 to 11). Such methods are advantageous in that inexpensive materials are applicable and treatment is simple. Zinc oxide also has absorbability to ultraviolet ray and accordingly has an advantage that it can absorb both ultraviolet and infrared rays. However, visible light transparency is required for applying to a transparent substrate such as windows of buildings, vehicular windows, telephone boxes, and the like. To establish transparency of zinc oxide particles, zinc oxide particles should be an ultrafine zinc oxide with an average primary particle diameter of about 0.1 $\mu$m or smaller. However, zinc oxide particles generally have large particles, because such zinc oxide particles aggregate in a higher-temperature sintering process. Higher-temperature sintering process is necessary to produce zinc oxide particles having high carrier concentration and high crystallinity for performing excellent heat shielding ability and conductivity (See Non-patent document 1). To solve the problem, metal fine particles with improved dispersibility have been studied (see Patent documents 12 and 13). However, it is very difficult to satisfy all characteristics of an average primary particle diameter fine enough to establish transparency, sufficient infrared ray shielding ability and sufficient conductivity. Moreover, zinc oxide is intrinsically inferior in environmental durability. Therefore, zinc oxide has not yet been practically used for infrared ray shielding.

Patent document 14 discloses infrared shielding particles produced by forming an ultrathin silica film on the surface of individual transparent conductive superfine particle such as ITO and AZO. Plasma-synthesized superfine titanium oxide particles having iron atoms and aluminum atoms regularly coordinated along the crystal lattice face are heated at 250°C for 30 min to form a lowly oxidized state by the absorption of oxygen to the atoms of the metal face such as Fe and Al atoms inserted in the crystal lattice and a silica film is formed by the above method.

Patent document 15 discloses zinc oxide particle having on the surface a cover layer formed of zinc silicate in an amount of 0.5-50% by weight in terms of zinc silicate ($Zn_2SiO_4$) relative to the zinc oxide.

Patent document 16 discloses a powder comprising silica-coated zinc oxide fine particles in which the surface of each particle is coated with silica, wherein large particles of 5 $\mu$m or more account for 0.1 mass % or less.

Patent document 1: JP-A-57-59748
Patent document 2: JP-A-57-59749
Patent document 3: JP-B-03-72011
Patent document 4: JP-B-04-929
Patent document 5: JP-B-05-6766
Patent document 6: JP-A-04-160037
Patent document 7: JP-A-05-126650
Patent document 8: JP-A-07-291680
Patent document 9: JP-A-10-310759
Patent document 10: JP-A-08-281860
Patent document 11: JP-A-2000-186237
Patent document 12: JP-A-2004-124033
Patent document 13: JP-A-05-319808
Patent document 14: JP-A-2004 124033
Patent document 15: EP-A1-1 112 964
Patent document 16 : US-A1-2006/167138

Non-Patent document 1: Shangfeng Du, "Calcination Effects on the Properties of Gallium-Doped Zinc Oxide Powders", J. Am. Ceram. Soc., 89[8]2440-2443 (2006)

DISCLOSURE OF THE INVENTION

PROBLEMS TO BE SOLVED BY THE INVENTION

In view of the above state of the art, it is an object of the present invention to provide **a method for producing** an ultrafine zinc oxide having sufficient infrared ray shielding ability and conductivity, and further having sufficient visible light transparency.

MEANS FOR SOLVING THE PROBLEM

**The subject-matter of the present invention is defined in the claims.**

One aspect of the present **disclosure** provides an ultrafine zinc oxide, comprising an element having a valence number of 3 or more, the zinc oxide bearing a metal compound on the surface thereof, and having an average primary particle diameter of 0.1 $\mu$m or smaller.

The element having a valence number of 3 or more is preferably at least one element selected from the group consisting of Sc, Y, In, Ga, Al, Ti, B, and lanthanides.

The metal compound is preferably a compound of at least one element selected from the group consisting of Si, Zr, Sn, Mg, Hf, Ge, Mo, W, V, Nb, Ta, Ca, Sr, and Ba.

It is preferable that the amount of the element having a valence number of 3 or more is within the range of 0.001 to 0.2 mol per mole of zinc oxide.

It is preferable that the amount of the metal oxide is within the range of 0.5 to 20 mass% of surface-treated zinc oxide.

Another aspect of the present **disclosure** provides a method for producing the above-mentioned ultrafine zinc oxide, comprising:

- coating the surface of zinc oxide containing an element having a valence number of 3 or more or a precursor compound to be converted into zinc oxide containing an element having a valence number of 3 or more by firing with a sintering-preventing component; and
- firing the zinc oxide or the precursor compound at 600 to 850°C.

In the above, the sintering-preventing component is preferably silica.

In the above method, it is preferable that the amount of the element having a valence number of 3 or more is within the range of 0.001 to 0.2 mol per mol of zinc oxide. It is also preferable that the amount of silica is within the range of 0.5 to 20 mass% as the mass proportion of $SiO_2$ in a surface-treated zinc oxide.

Still another aspect of the present **disclosure** provides a coating composition containing the above-mentioned ultrafine zinc oxide.

Further still another aspect of the present **disclosure** provides a thermoplastic resin composition containing the above-mentioned ultrafine zinc oxide.

Further still another aspect of the present **disclosure** provides an ink composition containing the above-mentioned ultrafine zinc oxide.

Further still another aspect of the present **disclosure** provides a laminated article comprising a glass substrate layer and an infrared ray shielding layer, wherein the infrared ray shielding layer comprising the above-mentioned ultrafine zinc oxide and a binder resin.

The present invention will be described below in detail.

The **method of the** present invention provides an ultrafine zinc oxide, comprising an element having a valence number of 3 or more. The zinc oxide bears a metal compound on its surface, and has an average primary particle diameter of 0.1 $\mu$m or smaller. The ultrafine zinc oxide has excellent infrared ray shielding property and conductivity because of the presence of an element having a valence number of 3 or more. The ultrafine zinc oxide also has sufficient transparency because of its visible light transparency. The sufficient visible light transparency in addition to the infrared ray shielding ability and conductivity of the ultrafine zinc oxide has not been known at the time of completion of the present invention and have newly found by the inventors of the present invention.

The element having a valence number of 3 or more is not particularly limited and may be any of elements having a valence number of 3 or more with the infrared ray shielding ability and conductivity. Preferable element is, however, at least one of the elements selected from the group consisting of Sc, Y, In, Ga, Al, Ti, B, and lanthanides. More preferable elements are elements belonging to Group XIII in the periodic table, and still more preferable elements are In, Ga, and Al.

In the present invention, the amount of the element having a valence number of 3 or more is within the range of 0.001 to 0.2 mol per mol of zinc oxide. The amount is more preferably 0.01 to 0.1 mol and particularly preferably 0.02 to 0.1 mol per mol of zinc oxide. If the amount is lower than 0.001 mol, the infrared ray shielding property may become insufficient and therefore it is not preferable. On the contrary, if it exceeds 0.2 mol, the effect may become saturated, which results in economical disadvantage, and thus, it is not preferable. Furthermore, surplus elements are not sufficiently diffused in zinc oxide crystal and are deposited on grain boundaries in the form of compounds. As a result, the deposited elements scatter visible light and the infrared ray shielding property and conductivity may undesirably be lowered.

The metal compound is derived from a sintering-preventing component, which will be described later. It is preferably a compound of at least one element selected from the group consisting of Si, Zr, Sn, Mg, Hf, Ge, Mo, W, V, Nb, Ta, Ca, Sr, and Ba and more preferably a compound of Si, Zr, Sn, Mg, or Hf and even more preferably a compound of Si or Sn. The metal compound is coated on the ultrafine zinc oxide in the form of an oxide, hydroxide, carbonate, or sulfate of the above-mentioned metal elements.

The amount of the metal compound is within the range of 0.5 to 20 mass% of the coated zinc oxide, as the amount of oxides. It is more preferably 0.5 to 15 mass%, still more preferably 1 to 10 mass%, and particularly preferably 1 to 5 mass%. If the amount of the above-mentioned metal compound is less than 0.5 mass%, the sintering preventing may become insufficient. In addition, the particles may become coarse, which leads to deterioration of transparency. Thus, it is not preferable. If it exceeds 20 mass%, the proportion of zinc oxide is relatively decreased to result in decrease of the heat ray shielding ability. Furthermore, the conductivity may be decreased because of insulation by the excess sintering-preventing component. Thus, it is not preferable, either.

The average primary particle diameter of the ultrafine zinc oxide **produced by the method** of the present invention is preferably 0.1 $\mu$m or smaller. The ultrafine zinc oxide having average primary particle diameter within such a range can suppress scattering of the visible light and is excellent in transparency. In this invention, the average primary particle diameter can be calculated from the relation for determining of BET specific surface area. Assuming that the particle shape is spherical, the average primary particle diameter of the sphere can be calculated from the relation:

$$\text{(BET specific surface area)}$$
$$= \text{(The spherical surface area of the sphere)}/$$
$$[\text{(The volume of the sphere)} \times \text{(Specific gravity of the}$$
$$\text{material)}].$$

The average primary particle diameter is more preferably 0.07 $\mu$m or smaller.

The BET specific surface area of the ultrafine zinc oxide **produced by the method** of the present invention is preferably 10 to 100 $m^2$/g. If the BET specific surface area exceeds 100 $m^2$/g, cohesion between the ultrafine zinc oxides becomes so strong that separating treatment of the coagulated particles, which requires much energy and time, may be needed. Furthermore, property deterioration may be progressed with the lapse of time. On the contrary, if it is less than 10 $m^2$/g, highly transparent product may not be obtained. The BET specific surface area is more preferably 10 to 70 $m^2$/g.

The optical transmittance of 550-nm light through the ultrafine zinc oxide **produced by the method** of the present invention is preferably 75% or higher and more preferably 80% or higher for the purpose for establishing excellent visible light transparency. The optical transmittance of 1900-nm light through the ultrafine zinc oxide **produced by the method** of the present invention is preferably 80% or lower and more preferably 70% or lower for the purpose for establishing excellent infrared ray transparency.

The volume resistivity value of the ultrafine zinc oxide **produced by the method** of the present invention is preferably 10,000 Ωcm or lower, more preferably 2,000 Ωcm or lower, and still more preferably 1,000 Ωcm or lower for the purpose for establishing excellent conductivity.

An example of the method will be explained in detail in the followings. The production method of the ultrafine zinc oxide described below is one aspect of the present invention.

The ultrafine zinc oxide can be produced by:

- coating the surface of zinc oxide containing an element having a valence number of 3 or more or a precursor compound to be zinc oxide containing an element having a valence number of 3 or more by firing with a sintering-preventing component on and
- firing the zinc oxide or the precursor compound at 600 to 850°C.

The method provides an ultrafine particle having the surface layer containing the sintering-preventing component which prevents the particles from aggregating by sintering. The product ultrafine particles are kept maintained as ultrafine particles even after firing at a high temperature enough to efficiently form solid solution, because of the element having a valence number of 3 or more. Consequently, the method can provides ultrafine particles having sufficient transparency, infrared ray shielding ability and conductivity.

The amount of the sintering-preventing component is preferably within the range of 0.5 to 20 mass% of surface-treated zinc oxide as the amount of oxides in the sintering-preventing component. It is more preferably 0.5 to 15 mass%, furthermore preferably 1 to 10 mass%, and particularly preferably 1 to 5 mass%. If it is less than 0.5 mass%, prevention of sintering may be insufficient and no ultrafine particles may be produced. On the contrary, if it exceeds 20 mass%, the proportion of zinc oxide is relatively smaller and infrared ray shielding effect may be insufficient.

More specifically, the method for producing an ultrafine zinc oxide can be performed, for example, in the following manner. The method for producing the ultrafine zinc oxide described below involves steps of (1) preparing a solid state pre-mixture of zinc oxide or a precursor compound to be converted into zinc oxide by firing and an element having a valence number of 3 or more; (2) mixing the pre-mixture of the step (1) with a sintering-preventing component; and (3) firing the mixture obtained in the step (2) at a temperature within the range of 600 to 850°C.

In the step (1), zinc oxide or a precursor compound to be converted into zinc oxide by firing is used. The precursor compound is not particularly limited and examples of the precursor compound include zinc hydroxide, zinc carbonate, basic zinc carbonate, zinc sulfate, and zinc nitrate.

In the above step (1), a solid state pre-mixture of zinc oxide or a precursor compound to be converted into zinc oxide by firing (hereinafter zinc oxide and the precursor compound are sometimes referred to as " a zinc compound or zinc compounds", collectively) with an element having a valence number of 3 or more in a solid state is prepared. The solid state pre-mixture may be prepared by:

- dry-mixing of zinc oxide or a precursor compound to be converted into zinc oxide by firing with a prescribed amount of a compound of an element having a valence number of 3 or more using a ball mill;
- a method for depositing an insoluble salt of the compound of the element having a valence number of 3 or more evenly on the zinc oxide surface, comprising adding a prescribed amount of a water-soluble salt of the compound of an element having a valence number of 3 or more to an aqueous dispersion of zinc oxide with adjusting pH to be neutral using an acidic or alkaline agent (so-called, "simultaneous neutralization"), to deposit the insoluble salt; or
- a method for simultaneously and evenly depositing insoluble salts of zinc and the element having a valence number of 3 or more, comprising using an aqueous mixed solution of a water soluble salt of zinc and a water soluble salt of the compound of the element having a valence number of 3 or more and an acidic or alkaline agent, (so-called, "a simultaneous depositing method").

An element having a valence number of 3 or more to be used in the above step (1) is not particularly limited and may be single substances or their compounds. Examples of the compound of the element having a valence number of 3 or more include boron compounds such as boric acid, lithium borate and sodium borate; aluminum compounds such as sodium aluminate, aluminum sulfate, aluminum chloride, aluminum nitrate, and aluminum tripropoxide; gallium compounds such as gallium oxide, gallium nitrate, and gallium chloride; and indium compounds such as indium oxide and indium chloride.

Examples of the compound also include scandium compounds such as scandium acetate, scandium carbonate, scandium chloride, scandium fluoride, scandium iodide, scandium nitrate, scandium oxide, scandium trifluoromethanesulfonate, and scandium tris(dodecyl sulfate).

Examples of the compound further include yttrium compounds such as yttrium acetate, yttrium oxide, yttrium bromide, yttrium carbonate, yttrium chloride, yttrium fluoride, yttrium iodide, yttrium isopropoxide, yttrium naphthenate, yttrium naphthate, yttrium neodecanate, yttrium nitrate, yttrium 2-ethylhexanoate, hexafluoroacetylacetonate yttrium, yttrium oxalate, yttrium peroxyacid salt, yttrium sulfate, yttrium sulfide, and yttrium tris(2,2,6,6-tetramethyl-3,5-heptanedioate).

Examples of the compound also include titanium compounds such as titanium tetrachloride, titanyl sulfate, titanium tetraisopropoxide, and sodium titanate.

Examples of the compound also include lanthanide compounds such as acetates, bromides, carbonates, chlorides, fluorides, iodides, nitrates, oxalates, oxides, phosphates, stearates, and sulfates of lanthanides.

In the step (2), which is to be carried out successively, a sintering-preventing component having a sintering preventing effect is added to the pre-mixture of a zinc compound and an element having a valence number of 3 or more obtained in the step (1). Addition of the sintering-preventing component as a sintering-preventing agent suppresses extreme grain growth, enables to perform firing at a high temperature, and makes it easier to diffuse the element having a valence number of 3 or more in the zinc oxide crystal. Accordingly, while keeping the particle diameter small, infrared ray shielding ability and conductivity are produced. That is, excellent infrared ray shielding ability and conductivity are produced while maintaining fine particle shape.

The sintering-preventing component is a component capable of preventing particles from sintering therebetween at the time of firing zinc oxide. The sintering-preventing component also prevents the particle diameter from enlarging by coagulation of the particles. The sintering-preventing component used in the present invention has substantially no adverse effect on the infrared ray shielding ability and conductivity. Sintering temperature of the sintering-preventing component is higher than that of zinc oxide, and the refractive index of the sintering-preventing component is not too high after firing. Furthermore, the sintering-preventing component has substantially no effect on the conductivity of the ultrafine zinc oxide.

The above-mentioned sintering-preventing component is not particularly limited as long as it meets the above-mentioned physical properties. The same metal compounds as the mentioned above or those which are converted into the above-mentioned metal compounds by drying or firing may be used. Examples of those having the above-mentioned physical properties specifically include compounds of at least one element selected from the group consisting of Si, Zr, Sn, Mg, Hf, Ge, Mo, W, V, Nb, Ta, Ca, Sr, and Ba, and more specifically include their halides such as chlorides, oxides, hydroxides, nitrates, carbonates, and sulfates. Two or more of these components may be used in combination. Preferred as the sintering-preventing component are Si, Zr, Sn, Mg, Hf, or their compounds because of excellent physical properties and more preferred are Si, Sn or their compounds. Addition of the sintering-preventing component simultaneously improves environmental durability of zinc oxide.

If the above-mentioned sintering-preventing component has a higher sintering temperature than zinc oxide, the component can prevent zinc oxide particles from aggregation in sintering the particles since the sintering-preventing component is hard to be sintered compared with zinc oxide when zinc oxide is fired at a sintering temperature or higher. As a result, the average particle diameter of the ultrafine zinc oxide will be kept within the above-mentioned range. The refractive index not so much high after firing leads to provide a sintering-preventing component having excellent visible light transparency without deteriorating transparency of the product ultrafine zinc oxide. In sintering process, the above-mentioned sintering-preventing component may be incorporated in the zinc oxide crystal. Even in such a case, sintering-preventing component is required to have no effect on the conductivity. From this viewpoint, the compounds of the above-mentioned elements are preferable.

Specific examples of the above-mentioned sintering-preventing component include silica, zirconium chloride, tin chloride, magnesium nitrate, hafnium chloride, germanium chloride, molybdenum oxide, tungsten oxide, vanadium oxide, niobium oxide, tantalum oxide, calcium hydroxide, strontium carbonate, and barium sulfate.

As the sintering-preventing component to be used in the step (2), any form of the component can be applied as long as the component covers the zinc oxide surface. Examples of the sintering-preventing component include precipitates from colloids or solutions. A method for adding the sintering-preventing component to the pre-mixture is not particularly limited and may be:

- dry-mixing of a mixture of a zinc compound and an element having a valence number of 3 or more with a powdery sintering-preventing component using a ball mill;

- a method comprising simultaneously neutralizing a basic compound containing a sintering-preventing component (for example, such a basic compound may be sodium silicate, ammonium tungstate, and the like) in an aqueous dispersion of a mixture of a zinc compound and an element having a valence number of 3 or more, to deposit an oxide on the surface of the mixture, followed by drying or firing the deposition to give the sintering-preventing component; and
- a method comprising gradually adding a metal alkylate compound (e.g. alkyl silicate such as ethyl silicate) to an aqueous dispersion of a mixture of a zinc compound and an element having a valence number of 3 or more, followed by drying or firing the mixture.

A method to carry out the above-mentioned step (2) may be any of the above-mentioned methods. However, a method which produces the most excellent effect is the method comprising adding a basic compound such as sodium silicate in an aqueous dispersion of a mixture of zinc compound and an element having a valence number of 3 or more and then simultaneously neutralizing the mixture with an acid, to allow deposition over such a sufficient time that hydrated silicon oxide in form of a dense coating on the surface of the mixture should be formed.

Next, the step (the step (3)) of firing the mixture containing the zinc compound and a compound of an element having a valence number of 3 or more containing the sintering-preventing component obtained in the above-mentioned step (2) is performed. The step (3) gives the ultrafine zinc oxide.

The firing conditions of the step (3) are not particularly limited. Preferred are conditions in which the zinc compound changes to zinc oxide and the element having a valence number of 3 or more is sufficiently diffused in a substrate composed of the zinc oxide. In the above-mentioned viewpoint, the firing temperature is preferably 600 to 850°C. When the temperature is 600°C or higher the crystallinity of zinc oxide can be increased and the element having a valence number of 3 or more can easily be diffused. When the temperature is 850 ° C or lower, the sintering preventing effect of the sintering-preventing component can affect effectively to give the ultrafine zinc oxide with an average primary particle diameter of 0.1 $\mu$m or smaller. The above-mentioned firing temperature is preferably 650 to 850°C and more preferably 700 to 800°C.

To improve the semiconductive property of zinc oxide, the firing ambient atmosphere is preferably inert gas atmosphere or reducing atmosphere. Reducing atmosphere is more preferable. The apparatus to be used for firing is not particularly limited as long as the apparatus can heat zinc oxide while keeping the atmosphere. Examples of the apparatus include a rotary kiln and an electric furnace.

The reducing atmosphere may be mixed gas atmosphere containing hydrogen and nitrogen and mixed gas atmosphere containing carbon monoxide and nitrogen. In terms of safety and cost, the mixed gas atmosphere containing hydrogen and nitrogen is preferable. In the mixed gas atmosphere containing hydrogen and nitrogen, the amount of hydrogen is preferably 1% by volume or more, and more preferably 5% by volume or more. The inert gas component may further include helium and argon in addition to nitrogen. They may be used alone or some of them may be used in combination.

The gas flow rate in the above-mentioned step (3) is not particularly limited and, for example, it is sufficient to add the amount equal to 1/10% by volume or more of the space volume to be heated in the apparatuses necessary for firing per minute. The addition timing of the ambient gas in the firing is preferably at the beginning for firing in the reducing atmosphere, for example, in the case of the mixed gas of hydrogen and nitrogen. Alternatively, hydrogen may be added after the temperature reaches the highest temperature.

The firing step may be conducted only once, or may be repeated in a plurality of times. In the case of repeating firing steps in a plurality of times, the firing condition steps may be altered at each step. In the case where the last firing step is carried out in oxidizing atmosphere in the step (3), it is preferable to select a condition so that the properties of the product ultrafine zinc oxide are not deteriorated. Grinding and classifying treatment may be optionally carried out before or after the above-mentioned step (3).

The grinder to be used for the above grinding is not particularly limited, but includes dry type grinders such as a hammer mill, a vapor phase energy fluid mill, an edge runner, and a pin mill, and wet type grinders such as an aqua mill, a sand mill, and a colloid mill.

Inorganic or organic surface treatment may be optionally carried out for the ultrafine zinc oxide obtained in the step (3). The way of surface treatment is not particularly limited and may be a surface treatment with hydrated aluminum oxide to improve the coating suitability; a silane coupling treatment for improving the dispersibility to a thermoplastic resin; and the like. These surface treatment agents and surface treatment methods may be properly selected in a conventional manner.

The ultrafine zinc oxide **produced by the method** of the present invention is remarkably excellent in transparency and may be preferably added as an excellent transparent and heat ray shielding agent having an absorption band in a wavelength range longer than 1500 nm, as a transparent conductive material with a volume resistivity of 1000 $\Omega$cm or lower for coating compositions, thermoplastic resin compositions, and ink compositions. The ultrafine zinc oxide is also an excellent in both ultraviolet ray shielding ability and heat ray shielding ability since the ultrafine zinc oxide has ultraviolet absorbability derived from an intrinsic characteristic of zinc oxide. A coating composition, a thermoplastic resin composition, and an ink composition containing the zinc oxide are also other aspects of the present **disclosure**.

The coating composition of the present **disclosure** can provide a glass substrate with excellent heat ray shielding ability and conductivity by applying the composition to the substrate. The thermoplastic resin composition of the present **disclosure** can provide excellent heat ray shielding ability to a glass substrate by forming a film in a conventionally known film-forming method such as extrusion molding and then laminating the film on the glass substrate by a conventionally known laminating method. A glass substrate layer produced in this manner and a laminate comprising an infrared ray shielding or conductive layer containing the ultrafine zinc oxide as a heat ray shielding agent or a conductive material and a binder resin are also other aspects of the present **disclosure**.

The ultrafine zinc oxide **produced by the method** of the present invention can be used as a transparent antistatic film and a transparent coating composition for imparting electric antistatic characteristics taking advantage of its excellent conductivity. For example, the ultrafine zinc oxide can be used preferably as an antistatic material for applying the ultrafine zinc oxide or laminating a film containing the ultrafine zinc oxide on the surface of screens of liquid crystal and plasma displays for which high visible light transmittance and dust-proof property are required. Further, it can be suitably used to apply to wrapping materials of electronic materials, or used as wrapping materials in form of films, which are considerably affected by static electricity. Alternatively, it can be used preferably for preventing the static electricity of insulating substances from charging. Such insulating substances include topcoats on coating faces for which static charge has to be prevented while the design property of the materials is maintained and plastics.

EFFECT OF THE INVENTION

The ultrafine zinc oxide **produced by the method** of the present invention can shield infrared ray with wavelength of 1500 nm or longer and has a volume resistivity value of 1000 $\Omega$cm or lower and transparency. Such ultrafine zinc oxide can be used preferably for a resin composition, glass composition and the like. Further, the method for producing the ultrafine zinc oxide of the present invention is a method capable of preferably producing the abovementioned ultrafine zinc oxide.

BRIEF DESCRIPTION OF THE DRAWINGS

Fig. 1 is a light transmitting spectrum obtained in Evaluation Example B-1.
Fig. 2 is a scanning electron microscopic photograph of Example B-5 obtained in Evaluation Example B-3. In this photograph, particles have a fine shape.
Fig. 3 is a scanning electron microscopic photograph of Comparative Example 3 obtained in Evaluation Example B-3. In this photograph, particles are coarsened.
Fig. 4 is a schematic drawing of an apparatus employed in Evaluation Example B-4.
Fig. 5 is the results of temperature measurement with lapse of time in Evaluation Example B-4.

Explanation of Symbols

1. Incandescent lamp
2. Films to be evaluated
3. Thermocouple

BEST MODE FOR CARRYING OUT THE INVENTION

Hereinafter, the present invention will be described more in detail referring to the following non-limiting Examples. **Examples B-13 to B-16 are not covered by the present invention.**

(Example A-1)

An aqueous zinc chloride solution was prepared by completely dissolving 100 g of zinc oxide (Grade 1 zinc oxide, Sakai Chemical Industry Co., Ltd., Sakai, Japan) in an aqueous hydrochloric acid solution containing 250 g of 35-mass% hydrochloric acid (Extra pure grade) and 350 g of purified water. To the prepared aqueous zinc chloride solution, 14.7 g of gallium nitrate octahydrate was added, and mixed the mixture until gallium nitrate octahydrate was completely dissolved to form a transparent solution. Separately, prepare an aqueous ammonium bicarbonate solution was prepared by dissolving 230 g of ammonium bicarbonate (Extra pure grade) in 1500 g of purified water. The above-mentioned aqueous zinc chloride solution in which gallium nitrate was dissolved was added to the aqueous ammonium bicarbonate solution over 120 minutes to produce precipitate. Next, 150 ml of an aqueous solution containing 23.5 g (corresponding to 5 g as $SiO_2$) of sodium metasilicate nonahydrate (Extra pure grade), and 10-mass% sulfuric acid were simultaneously added while the flow rates were adjusted so as to keep pH within the range of 7 to 9 over 90 minutes. Then, the obtained precipitate was sufficiently washed, separated from the liquid phase, and dried at 130°C over 5 hours. Next, the dried powder was pulverized by an agate mortar to give a precursor to be fired. The precursor to be fired was put in an alumina boat and heated to 700°C at the heating rate of 200 °C/hour using a tubular furnace while a mixed gas of 0.21 L/minute of nitrogen gas and 0.09 L/minute of hydrogen gas was circulated. After being kept as it was for 2 hours, the substance was cooled to room temperature to give ultrafine zinc oxide A-A. The average primary particle diameter of the ultrafine zinc oxide A-A was 0.025 $\mu$m.

(Example A-2)

Ultrafine zinc oxide A-B was obtained in the same manner as Example A-1, except that the amount of sodium metasilicate nonahydrate (Extra pure grade) was set to be 4.7 g (corresponding to 1 g as $SiO_2$). The average primary particle diameter of the ultrafine zinc oxide A-B was 0.034 $\mu$m.

(Example A-3)

Ultrafine zinc oxide A-C was obtained in the same manner as Example A-1, except that the amount of sodium metasilicate nonahydrate (Extra pure grade) was set to be 47.0 g (corresponding to 10 g as $SiO_2$). The average primary particle diameter of the ultrafine zinc oxide A-C was 0.018 $\mu$m.

(Example A-4)

Ultrafine zinc oxide A-D was obtained in the same manner as Example A-1, except that 14.7 g of gallium nitrate octahydrate was replaced with 14.8 g of aluminum chloride hexahydrate. The average primary particle diameter of the ultrafine zinc oxide A-D was 0.030 $\mu$m.

(Example A-5)

Ultrafine zinc oxide A-E was obtained in the same manner as Example A-1, except that 14.7 g of gallium nitrate octahydrate was replaced with 10.8 g of indium chloride tetrahydrate. The average primary particle diameter of the ultrafine zinc oxide A-E was 0.035 $\mu$m.

(Example A-6)

Ultrafine zinc oxide A-F was obtained in the same manner as Example A-1, except that 14.7 g of gallium nitrate octahydrate was replaced with 34.3 g of gallium nitrate octahydrate. The average primary particle diameter of the ultrafine zinc oxide A-F was 0.016 $\mu$m.

(Example A-7)

Ultrafine zinc oxide A-G was obtained in the same manner as Example A-1, except that the firing temperature was set to 800°C in lieu of 700°C. The average primary particle diameter of the ultrafine zinc oxide A-G was 0.031 $\mu$m.

(Comparative Example A-1)

An aqueous zinc chloride solution was prepared by completely dissolving 100 g of zinc oxide (Grade 1 zinc oxide, Sakai Chemical Industry Co., Ltd., Sakai, Japan) in an aqueous hydrochloric acid solution containing 250 g of 35-mass% hydrochloric acid (Extra pure grade) and 350 g of purified water. To the prepared aqueous zinc chloride solution, 14.7 g of gallium nitrate octahydrate was added, and mixed the mixture until gallium nitrate octahydrate was completely dissolved to form a transparent solution. Separately, an aqueous ammonium bicarbonate solution was prepared by dissolving 230 g of ammonium bicarbonate (Extra pure grade) in 1500 g of purified water. The aqueous zinc chloride solution in which gallium nitrate was dissolved was added to the aqueous ammonium bicarbonate solution over 120 minutes to produce precipitate. Then, the obtained precipitate was sufficiently washed, separated from the liquid phase, and dried at 130 ° Cover 5 hours. Next, the dried powder was pulverized by an agate mortar to give a precursor to be fired. The precursor to be fired was put in an alumina boat and heated to 700°C at 200°C/hour while circulating a mixed gas of 0.21 L/minute of nitrogen gas and 0.09 L/minute of hydrogen gas using a tubular furnace. After being kept as it was for 2 hours, the substance was cooled to room temperature to give silica-free ultrafine zinc oxide A-H. The average primary particle diameter of the ultrafine zinc oxide A-H was 0.13 $\mu$m.

(Comparative Example A-2)

Silica-free ultrafine zinc oxide A-1 was obtained in the same manner as Comparative Example A-1, except that 14.7 g of gallium nitrate octahydrate was replaced with 14.8 g of aluminum chloride hexahydrate. The average primary particle diameter of the ultrafine zinc oxide A-I was 0.35 $\mu$m.

(Comparative Example A-3)

Silica-free ultrafine zinc oxide A-J was obtained in the same manner as Comparative Example A-1, except that 14.7 g of gallium nitrate octahydrate was replaced with 10.8 g of indium chloride tetrahydrate. The average primary particle diameter of the ultrafine zinc oxide A-J was 0.53 $\mu$m.

(Comparative Example A-4)

Ultrafine zinc oxide A-K was obtained in the same manner as Example A-1, except that the firing temperature was set to 900 ° C in lieu of 700 ° C. The average primary particle diameter of the ultrafine zinc oxide A-K was 0.21 $\mu$m.
The synthesis conditions and BET specific surface area of the ultrafine zinc oxides obtained in the above-mentioned Examples A-1 to A-7 and Comparative Examples A-1 to A-4 are illustrated in Table 1.

Table 1

| | | | Preparation condition | | | | Analysis of prepared substance | | Evaluation example |
| | | | Element having a valence number of three or more | Added amount per mol of zinc oxide (mol) | Silica amount (g/100 g of ZnO) | Firing temperature (°C) | Element having a valence number of three or more — Content mol/mol of ZnO | Metal compound — mass% of silica | BET specific surface area (m²/g) |
| | | Ultrafine zinc oxide | | | | | | | |
|---|---|---|---|---|---|---|---|---|---|
| Examples | A-1 | A-A | Ga | 0.03 | 5 | 700 | 0.029 | 4.1 | 42 |
| | A-2 | A-B | Ga | 0.03 | 1 | 700 | 0.028 | 0.8 | 31 |
| | A-3 | A-C | Ga | 0.03 | 10 | 700 | 0.028 | 7.9 | 60 |
| | A-4 | A-D | Al | 0.05 | 5 | 700 | 0.049 | 4.2 | 35 |
| | A-5 | A-E | In | 0.03 | 5 | 700 | 0.028 | 4.1 | 30 |
| | A-6 | A-F | Ga | 0.07 | 5 | 700 | 0.070 | 3.9 | 65 |
| | A-7 | A-G | Ga | 0.03 | 5 | 800 | 0.029 | 4.1 | 34 |
| Comparative Examples | A-1 | A-H | Ga | 0.03 | — | 700 | 0.030 | — | 8 |
| | A-2 | A-I | Al | 0.03 | — | 700 | 0.028 | — | 3 |
| | A-3 | A-J | In | 0.03 | — | 700 | 0.028 | — | 2 |
| | A-4 | A-K | Ga | 0.03 | 5 | 900 | 0.029 | 4.1 | 5 |

(Analysis method A)

The composition of the ultrafine zinc oxides obtained in Examples A-1 to A-7 and Comparative Examples A-1 to A-4 was analyzed.

In 50 ml of pure water, each 0.2 g sample of the ultrafine zinc oxide was added. Then, hydrochloric acid (for analysis use) was further added thereto, and mixed the mixture until it became a completely transparent solution. The obtained aqueous solution was transferred to a 100 ml measuring flask, and pure water was added in the flask to adjust the total volume to be 100 ml.

The obtained aqueous solution was analyzed by ICP emission spectrophotometer (SPS 1700 HVR model, Seiko Instruments Inc., Chiba, Japan). Using a previously produced analytical curve, the amount of the element having a valence number of 3 or more and the amount of silica were determined. Then the determined amounts of the element or silica were converted by calculation to the amount relative to the amount of zinc oxide.

Table 1 illustrates the amounts of the element having a valence number of 3 or more represented by mol amount per mol of ZnO. The amounts of silica are represented by mass% in the prepared substance.

(Evaluation Example A) - Evaluation of heat ray shielding ability in the form of thin film

Heat ray shielding abilities of the ultrafine zinc oxides obtained in the Examples A-1 to A-7 and Comparative Examples A-1 to A-4 were tested as follows.

Each ultrafine zinc oxide-dispersed coating material was prepared by mixing 2.36 g of each ultrafine zinc oxide, 5.5 g of alkyd resin varnish (Beckosol J-524, Dainippon Ink and Chemicals, Inc., Tokyo, Japan), 2.8 g of melamine resin varnish (Super Beckamine J-820, Dainippon Ink and Chemicals, Inc.) and 5.7 g of xylene (Extra pure grade) and dispersing them together with 30 g of 1.5 mmφ glass beads using a paint conditioner over 180 minutes. Next, a small amount of the dispersion coating material was sampled on a glass plate and formed into a film using a No. 12 bar coater and successively baked at 130°C over 30 minutes to give each film for evaluation. The optical transmittance of the film for evaluation was measured by UV-VIS-NIR spectrophotometers (V-570 type spectrophotometer and ILN 471 type integration apparatus, JASCO Corp., Tokyo, Japan). The transmittances at 550 nm and 1900 nm are illustrated in Table 2.

Table 2

| | | Ultrafine zinc oxide | 550 nm | 1900 nm |
|---|---|---|---|---|
| Examples | A-1 | A-A | 82 | 2 |
| | A-2 | A-B | 83 | 5 |
| | A-3 | A-C | 85 | 3 |
| | A-4 | A-D | 80 | 60 |
| | A-5 | A-E | 71 | 67 |
| | A-6 | A-F | 86 | 6 |
| | A-7 | A-G | 83 | 2 |
| Comparative Examples | A-1 | A-H | 55 | 6 |
| | A-2 | A-I | 66 | 65 |
| | A-3 | A-J | 52 | 71 |
| | A-4 | A-K | 65 | 2 |

Table 2 shows that the zinc oxide containing Ga of Examples A-1 to A-3, A-6 and A-7 became desirable zinc oxide fine particles having high visible light transmittance at 550 nm and significantly low near infrared ray transmittance at 1900 nm. The results of zinc oxide of Comparative Examples A-1 and A-4, show that the specific surface area was considerably decreased and transparency was lost since the zinc oxide of Comparative Example A-1 did not contain silica as the sintering-preventing agent, and the zinc oxide of Comparative Example A-4 was fired at temperature as high as 900°C. On the other hand, the results of the zinc oxides of Examples A-4 and A-5, which contained Al and In respectively, showed that the zinc oxides had excellent properties such as high visible light transmittance at 550 nm and low near infrared ray transmittance at 1900 nm as compared with the silica-free zinc oxide of Comparative Examples A-2 and A-3.

(Example B-1)

An aqueous zinc chloride solution was prepared by completely dissolving 100 g of zinc oxide (Grade 1 zinc oxide) in an aqueous hydrochloric acid solution containing 250 g of 35-mass% hydrochloric acid (Extra pure grade) and 350 g of purified water. To the prepared aqueous zinc oxide solution, 15.9 g of scandium chloride hexahydrate (reagent) was added and mixed the mixture to dissolve zinc oxide until the solution became transparent. Separately, an aqueous sodium carbonate solution was prepared by 154.6 g of sodium carbonate (Extra pure grade) was dissolved in 1546 g of purified water. The aqueous zinc oxide solution in which scandium chloride was dissolved was added to the aqueous sodium carbonate solution over 120 minutes to produce precipitate. Then, the precipitate was sufficiently washed, separated from liquid phase, and dried at 130°C over 5 hours. Next, the dried powder was pulverized in an agate mortar to give a precursor compound. The precursor compound was set in a magnetic crucible and fired at 400°C for 1 hour using a muffle furnace to give a mixed oxide of scandium and zinc. Under stirring condition, the mixed oxide was put in 1000 g of purified water and successively, 90 ml of an aqueous solution containing 14.2 g (corresponding to 3 g as $SiO_2$) of sodium metasilicate nonahydrate (Extra pure grade) and 10-mass% sulfuric acid (reagent) were simultaneously added while the flow rates were adjusted as to keep pH within the range of 7 to 9 over 90 minutes. Then, the obtained precipitate was sufficiently washed, separated from the liquid phase and dried at 130°C over 5 hours.

The dried powder was subsequently pulverized by an agate mortar to give a precursor to be fired. The precursor to be fired was put in an alumina boat and heated to 700°C at the heating rate of 200 ° C/hour using a tubular furnace while a mixed gas of 0.285 L/minute of nitrogen gas and 0.015 L/minute of hydrogen gas was circulated. After being kept as it was for 2 hours, the substance was cooled to room temperature to give ultrafine zinc oxide B-A. The average primary particle diameter of the ultrafine zinc oxide B-A was 0.021 $\mu$m and the volume resistivity value of the ultrafine zinc oxide B-A was 521 $\Omega$cm.

(Example B-2)

Ultrafine zinc oxide B-B was obtained in the same manner as Example B-1, except that 15.9 g of scandium chloride hexahydrate (reagent) was replaced with 23.5 g of yttrium nitrate hexahydrate (reagent). The average primary particle diameter of the ultrafine zinc oxide B-B was 0.031 $\mu$m and the volume resistivity value of the ultrafine zinc oxide B-B was 665 $\Omega$cm.

(Example B-3)

Ultrafine zinc oxide B-C was obtained in the same manner as Example B-1, except that 15.9 g of scandium chloride hexahydrate (reagent) was replaced with 18.0 g of indium chloride tetrahydrate (for chemical use). The average primary particle diameter of the ultrafine zinc oxide B-C was 0.041 $\mu$m and the volume resistivity value of the ultrafine zinc oxide B-C was 459 $\Omega$cm.

(Example B-4)

Ultrafine zinc oxide B-D was obtained in the same manner as Example B-1, except that 15.9 g of scandium chloride hexahydrate (reagent) was replaced with 23.4 g of gallium nitrate octahydrate (reagent). The average primary particle diameter of the ultrafine zinc oxide B-D was 0.024 $\mu$m and the volume resistivity value of the ultrafine zinc oxide B-D was 333 $\Omega$cm.

(Example B-5)

Ultrafine zinc oxide B-E was obtained in the same manner as Example B-1, except that 15.9 g of scandium chloride hexahydrate (reagent) was replaced with 23.0 g of aluminum nitrate nonahydrate (JIS Extra pure grade). The average primary particle diameter of the ultrafine zinc oxide B-E was 0.022 $\mu$m and the volume resistivity value of the ultrafine zinc oxide B-E was 474 $\Omega$cm.

(Example B-6)

Ultrafine zinc oxide B-F was obtained in the same manner as Example B-1, except that 15.9 g of scandium chloride hexahydrate (reagent) was replaced with 11.6 g of titanium (IV) chloride (reagent). The average primary particle diameter of the ultrafine zinc oxide B-F was 0.024 $\mu$m and the volume resistivity value of the ultrafine zinc oxide B-F was 514 $\Omega$cm.

(Example B-7)

An aqueous zinc chloride solution was prepared by completely dissolving 100 g of zinc oxide (Grade 1 zinc oxide) in an aqueous hydrochloric acid solution containing 250 g of 35 mass% hydrochloric acid (Extra pure grade) and 350 g of purified water. Separately, an aqueous sodium carbonate solution was prepared by dissolving 154.6 g of sodium carbonate (Extra pure grade) in 1546 g of purified water. The aqueous zinc oxide solution was added to the aqueous sodium carbonate solution over 120 minutes to produce precipitate. Then, the precipitate was sufficiently washed, mixed with 3.8 g of boric acid (Extra pure grade) and stirred for 20 minutes. Next, the obtained slurry was evaporated and dried at 130°C and the obtained dried powder was pulverized in an agate mortar to give a precursor compound. The precursor compound was set in a magnetic crucible and fired at 400°C for 1 hour using a muffle furnace to obtain a mixed oxide of boron and zinc. The mixed oxide was put in 1000 g of purified water with stirring, and successively, 90 ml of an aqueous solution containing 14.2 g (corresponding to 3 g as $SiO_2$) of sodium metasilicate nonahydrate (Extra pure grade) and 10-mass% sulfuric acid (reagent) were simultaneously added while the flow rates were adjusted as to keep pH within the range of 7 to 9 over 90 minutes. Then, the obtained precipitate was sufficiently washed, separated from the liquid phase and dried at 130 ° C over 5 hours.
Next, the dried powder was pulverized by an agate mortar to given a precursor to be fired. The precursor to be fired was put in an alumina boat and heated to 700°C at the heating rate of 200°C/hour using a tubular furnace while a mixed gas of 0.285 L/minute of nitrogen gas and 0. 015 L/minute of hydrogen gas was circulated. After being kept as it was for 2 hours, the substance was cooled to room temperature to give ultrafine zinc oxide B-G. The average primary particle diameter of the ultrafine zinc oxide B-G was 0.021 μm and the volume resistivity value of the ultrafine zinc oxide B-G was 536 Ωcm.

(Example B-8)

Ultrafine zinc oxide B-H was obtained in the same manner as Example B-1, except that 15.9 g of scandium chloride hexahydrate (reagent) was replaced with 26.7 g of cerium nitrate hexahydrate (Extra pure grade). The average primary particle diameter of the ultrafine zinc oxide B-H was 0.019 μm and the volume resistivity value of the ultrafine zinc oxide B-H was 543 Ωcm.

(Example B-9)

Ultrafine zinc oxide B-I was obtained in the same manner as Example B-1, except that 15.9 g of scandium chloride hexahydrate (reagent) was replaced with 27.4 g of europium nitrate hexahydrate (reagent). The average primary particle diameter of the ultrafine zinc oxide B-I was 0.022 μm and the volume resistivity value of the ultrafine zinc oxide B-I was 540 Ωcm.

(Example B-10)

Ultrafine zinc oxide B-J was obtained in the same manner as Example B-1, except that 15.9 g of scandium chloride hexahydrate (reagent) was replaced with 23.8 g of ytterbium chloride hexahydrate (reagent). The average primary particle diameter of the ultrafine zinc oxide B-J was 0.025 μm and the volume resistivity value of the ultrafine zinc oxide B-J was 692 Ωcm.

(Example B-11)

Ultrafine zinc oxide B-K was obtained in the same manner as Example B-1, except that 15.9 g of scandium chloride hexahydrate (reagent) was replaced with 3.7 g of aluminum nitrate nonahydrate (JIS Extra pure grade). The average primary particle diameter of the ultrafine zinc oxide B-K was 0. 026 μm and the volume resistivity value of the ultrafine zinc oxide B-K was 547 Ωcm.

(Example B-12)

Ultrafine zinc oxide B-L was obtained in the same manner as Example B-1, except that 15.9 g of scandium chloride hexahydrate (reagent) was replaced with 69.1 g of aluminum nitrate nonahydrate (JIS Extra pure grade). The average primary particle diameter of the ultrafine zinc oxide B-L was 0.035 μm and the volume resistivity value of the ultrafine zinc oxide B-K was 481 Ωcm.

(Example B-13)

Ultrafine zinc oxide B-M was obtained in the same manner as Example B-5, except that 90 ml of the aqueous solution containing 14.2 g (corresponding to 3 g as $SiO_2$) of sodium metasilicate nonahydrate (Extra pure grade) and 10-mass% sulfuric acid (reagent) were replaced with 90 ml of an aqueous solution containing 5.7 g (corresponding to 3 g as $ZrO_2$) of zirconium chloride (reagent) and 10-mass% sodium hydroxide aqueous solution (reagent). The average primary particle diameter of the ultrafine zinc oxide B-M was 0.026 $\mu$m and the volume resistivity value of the ultrafine zinc oxide B-M was 450 $\Omega$cm.

(Example B-14)

Ultrafine zinc oxide B-N was obtained in the same manner as Example B-5, except that 90 ml of the aqueous solution containing 14.2 g (corresponding to 3 g as $SiO_2$) of sodium metasilicate nonahydrate (Extra pure grade) and 10-mass% sulfuric acid (reagent) were replaced with 90 ml of an aqueous solution containing 7.0 g (corresponding to 3 g as $SnO_2$) of tin(IV) chloride pentahydrate (Extra pure grade) and 10-mass% sodium hydroxide aqueous solution (reagent). The average primary particle diameter of the ultrafine zinc oxide B-N was 0.027 $\mu$m and the volume resistivity value of the ultrafine zinc oxide B-N was 593 $\Omega$cm.

(Example B-15)

Ultrafine zinc oxide B-O was obtained in the same manner as Example B-5, except that 90 ml of the aqueous solution containing 14.2 g (corresponding to 3 g as $SiO_2$) of sodium metasilicate nonahydrate (Extra pure grade) and 10-mass% sulfuric acid (reagent) were replaced with 90 ml of an aqueous solution containing 19.1 g (corresponding to 3 g as MgO) of magnesium nitrate hexahydrate (Extra pure grade) and 10-mass% sodium hydroxide aqueous solution (reagent). The average primary particle diameter of the ultrafine zinc oxide B-O was 0.028 $\mu$m and the volume resistivity value of the ultrafine zinc oxide B-O was 608 $\Omega$cm.

(Example B-16)

Ultrafine zinc oxide B-P was obtained in the same manner as Example B-5, except that 90 ml of the aqueous solution containing 14.2 g (corresponding to 3 g as $SiO_2$) of sodium metasilicate nonahydrate (Extra pure grade) and 10-mass% sulfuric acid (reagent) were replaced with 90 ml of an aqueous solution containing 4.6 g (corresponding to 3 g as $HfO_2$) of hafnium chloride (reagent) and an aqueous solution of 10-mass% sodium hydroxide (reagent). The average primary particle diameter of the ultrafine zinc oxide B-P was 0.020 $\mu$m and the volume resistivity value of the ultrafine zinc oxide B-P was 632 $\Omega$cm.

(Example B-17)

Ultrafine zinc oxide B-Q was obtained in the same manner as Example B-5, except that 14.2 g (corresponding to 3 g as $SiO_2$) of sodium metasilicate nonahydrate (Extra pure grade) was replaced with 3.8 g (corresponding to 0.8 g as $SiO_2$) of sodium metasilicate nonahydrate (Extra pure grade). The average primary particle diameter of the ultrafine zinc oxide B-Q was 0.054 $\mu$m and the volume resistivity value of the ultrafine zinc oxide B-Q was 893 $\Omega$cm.

(Example B-18)

Ultrafine zinc oxide B-R was obtained in the same manner as Example B-5, except that 14.2 g (corresponding to 3 g as $SiO_2$) of sodium metasilicate nonahydrate (Extra pure grade) was replaced with 71.1 g (corresponding to 15 g as $SiO_2$) of sodium metasilicate nonahydrate (Extra pure grade). The average primary particle diameter of the ultrafine zinc oxide B-R was 0.012 $\mu$m and the volume resistivity value of the ultrafine zinc oxide B-R was 352 $\Omega$cm.

(Example B-19)

Ultrafine zinc oxide B-S was obtained in the same manner as Example B-5, except that reducing firing temperature was set to 600°C in lieu of 700°C. The average primary particle diameter of the ultrafine zinc oxide B-S was 0.017 $\mu$m and the volume resistivity value of the ultrafine zinc oxide B-S was 647 $\Omega$cm.

(Example B-20)

Ultrafine zinc oxide B-T was obtained in the same manner as Example B-5, except that reducing firing temperature was set to 850°C in lieu of 700°C. The average primary particle diameter of the ultrafine zinc oxide B-T was 0.051 $\mu$m and the volume resistivity value of the ultrafine zinc oxide B-T was 145 $\Omega$cm.

(Comparative Example B-1)

An aqueous zinc chloride solution was prepared by completely dissolving 100 g of zinc oxide (Grade 1 zinc oxide, Sakai Chemical Industry Co., Ltd.) in an aqueous hydrochloric acid solution containing 250 g of 35-mass% hydrochloric acid (Extra pure grade) and 350 g of purified water. To the prepared aqueous zinc oxide solution, 0.46 g of aluminum nitrate nonahydroxide (JIS Extra pure grade) was further added and mixed the mixture until aluminum nitrate nonahydroxide was completely dissolved to form a transparent solution. Separately, an aqueous sodium carbonate solution was prepared by dissolving 154.6 g of sodium carbonate (Extra pure grade) in 1546 g of purified water. The above-mentioned aqueous zinc oxide solution in which aluminum nitrate nonahydrate was dissolved was added to the aqueous sodium carbonate solution over 120 minutes to produce precipitate. Then, the precipitate was sufficiently washed, separated from liquid phase, and dried at 130°C over 5 hours. The dried powder was subsequently pulverized in an agate mortar to give a precursor compound.

The precursor compound was set in a magnetic crucible and fired at 400°C for 1 hour using a muffle furnace to give a mixed oxide of aluminum and zinc. Under stirring condition, the mixed oxide was put in 1,000 g of purified water and successively, 90 ml of an aqueous solution containing 14.2 g (corresponding to 3 g as $SiO_2$) of sodium metasilicate nonahydrate (Extra pure grade) and 10-mass% sulfuric acid (reagent) were simultaneously added while the flow rates were adjusted as to keep pH within the range of 7 to 9 over 90 minutes. Then, the obtained precipitate was sufficiently washed, was separated from the liquid phase, and dried at 130°C over 5 hours.

The dried powder was subsequently pulverized by an agate mortar to obtain a precursor to be fired. The precursor to be fired was put in an alumina boat and heated to 700°C at the heating rate of 200°C/hour using a tubular furnace while a mixed gas of 0.285 L/minute of nitrogen gas and 0.015 L/minute of hydrogen gas was circulated. After being kept as it was for 2 hours, the substance was cooled to room temperature to obtain ultrafine zinc oxide B-U. The average primary particle diameter of the ultrafine zinc oxide B-U was 0.027 $\mu$m and the volume resistivity value of the ultrafine zinc oxide B-U was 35,000 $\Omega$cm.

(Comparative Example B-2)

Ultrafine zinc oxide B-V was obtained in the same manner as Comparative Example B-1, except that 0.46 g of aluminum nitrate nonahydrate (JIS Extra pure grade) was replaced with 115.2 g of aluminum nitrate nonahydrate (JIS Extra pure grade) . The average primary particle diameter of the ultrafine zinc oxide B-V was 0.045 $\mu$m and the volume resistivity value of the ultrafine zinc oxide B-V was 581 $\Omega$cm.

(Comparative Example B-3)

Ultrafine zinc oxide B-W was obtained in the same manner as Comparative Example B-1, except that 0.46 g of aluminum nitrate nonahydrate (JIS Extra pure grade) was replaced with 23.0 g of aluminum nitrate nonahydrate (JIS Extra pure grade), and 14.2 g (corresponding to 3 g as $SiO_2$) of sodium metasilicate nonahydrate (Extra pure grade) was replaced with 0.95 g (corresponding to 0.2 g as $SiO_2$) of sodium metasilicate nonahydrate (Extra pure grade). The average primary particle diameter of the ultrafine zinc oxide B-W was 0.153 $\mu$m and the volume resistivity value of the ultrafine zinc oxide B-W was 376 $\Omega$cm.

(Comparative Example B-4)

Ultrafine zinc oxide B-X was obtained in the same manner as Comparative Example B-3, except that 14.21 g (corresponding to 3 g as $SiO_2$) of sodium metasilicate nonahydrate (Extra pure grade) was replaced with 142.0 g (corresponding to 30 g as $SiO_2$) of sodium metasilicate nonahydrate (Extra pure grade). The average primary particle diameter of the ultrafine zinc oxide B-X was 0.007 $\mu$m and the volume resistivity value of the ultrafine zinc oxide B-X was 1,276 $\Omega$cm.

(Comparative Example B-5)

Ultrafine zinc oxide B-Y was obtained in the same manner as Example B-5, except that reducing firing temperature of 700°C was replaced with 500°C. The average primary particle diameter of the ultrafine zinc oxide B-Y was 0.014 $\mu$m and the volume resistivity value of the ultrafine zinc oxide B-Y was 950 $\Omega$cm.

(Comparative Example B-6)

Ultrafine zinc oxide B-Z was obtained in the same manner as Example B_5, except that reducing firing temperature was set to 1,000°C in lieu of 700°C. The average primary particle diameter of the ultrafine zinc oxide B-Z was 0.536 $\mu$m and the volume resistivity value of the ultrafine zinc oxide B-Z was 30 $\Omega$cm.

(Comparative Example B-7)

Ultrafine zinc oxide (FINEX-50, manufactured by Sakai Chemical Industry Co., Ltd.) was used as ultrafine zinc oxide B-$\alpha$. The average primary particle diameter of the ultrafine zinc oxide B-$\alpha$ was 0.021 $\mu$m and the volume resistivity value of the ultrafine zinc oxide B-$\alpha$ was 22,870,000 $\Omega$cm.

Table 3-A

| Example No. | Ultrafine zinc oxide | Preparation condition | | | | Firing temperature |
|---|---|---|---|---|---|---|
| | | Element having a valence number of three or more | | Coating agent | | |
| | | Type | Amount per mol of zinc oxide (mol) | Type | Silica amount per 100 g of ZnO (g) | (°C) |
| B-1 | B-A | Sc | 0.05 | Si | 3 | 700 |
| B-2 | B-B | Y | 0.05 | Si | 3 | 700 |
| B-3 | B-C | In | 0.05 | Si | 3 | 700 |
| B-4 | B-D | Ga | 0.05 | Si | 3 | 700 |
| B-5 | B-E | Al | 0.05 | Si | 3 | 700 |
| B-6 | B-F | Ti | 0.05 | Si | 3 | 700 |
| B-7 | B-G | B | 0.05 | Si | 3 | 700 |
| B-8 | B-H | Ce | 0.05 | Si | 3 | 700 |
| B-9 | B-I | Eu | 0.05 | Si | 3 | 700 |
| B-10 | B-J | Yb | 0.05 | Si | 3 | 700 |
| B-11 | B-K | Al | 0.008 | Si | 3 | 700 |
| B-12 | B-L | Al | 0.15 | Si | 3 | 700 |
| B-13 | B-M | Al | 0.05 | Zr | 3 | 700 |
| B-14 | B-N | Al | 0.05 | Sn | 3 | 700 |
| B-15 | B-0 | Al | 0.05 | Mg | 3 | 700 |
| B-16 | B-P | Al | 0.05 | Hf | 3 | 700 |
| B-17 | B-Q | Al | 0.05 | Si | 0.8 | 700 |
| B-18 | B-R | Al | 0.05 | Si | 15 | 700 |
| B-19 | B-S | Al | 0.05 | Si | 3 | 600 |
| B-20 | B-T | Al | 0.05 | Si | 3 | 850 |

Table 3-B

| Comparative Example No. | Ultrafine zinc oxide | Preparation condition | | | | Firing temperature |
| --- | --- | --- | --- | --- | --- | --- |
| | | Element having a valence number of three or more | | Coating agent | | |
| | | Type | Amount per mol of zinc oxide (mol) | Type | Silica amount per 100 g of ZnO (g) | (°C) |
| B-1 | B-U | Al | 0.001 | Si | 3 | 700 |
| B-2 | B-V | Al | 0.25 | Si | 3 | 700 |
| B-3 | G-W | Al | 0.05 | Si | 0.2 | 700 |
| B-4 | B-X | Al | 0.05 | Si | 30 | 700 |
| B-5 | B-Y | Al | 0.05 | Si | 3 | 500 |
| B-6 | B-Z | Al | 0.05 | Si | 3 | 1000 |
| B-7 | B-$\alpha$ | - | - | - | - | - |

Table 3-C

| Example No. | Ultrafine zinc oxide | Analysis of prepared substance | | | | Evaluation | | | | |
|---|---|---|---|---|---|---|---|---|---|---|
| | | Element having a valence number of three or more | | Metal compound | | Physical property | | Optical transmittance | | Electric resistivity |
| | | Element | Content mol/mol of ZnO | Element | mass % as oxide | Average primary particle diameter ($\mu$m) | BET specific surface area (m$^2$/g) | At 550 nm (%) | At 1900 nm (%) | Volume resistivity value ($\Omega$cm) |
| B-1 | B-A | Sc | 0.049 | Si | 2.5 | 0.021 | 51 | 87 | 41 | 521 |
| B-2 | B-B | Y | 0.049 | Si | 2.5 | 0.031 | 35 | 88 | 46 | 665 |
| B-3 | B-C | In | 0.049 | Si | 2.4 | 0.041 | 26 | 76 | 44 | 459 |
| B-4 | B-D | Ga | 0.049 | Si | 2.5 | 0.024 | 44 | 86 | 4 | 333 |
| B-5 | B-E | Al | 0.050 | Si | 2.5 | 0.022 | 49 | 82 | 50 | 474 |
| B-6 | B-F | Ti | 0.049 | Si | 2.5 | 0.024 | 44 | 83 | 58 | 514 |
| B-7 | B-G | B | 0.048 | Si | 2.6 | 0.021 | 52 | 88 | 59 | 536 |
| B-8 | B-H | Ce | 0.048 | Si | 2.4 | 0.019 | 56 | 86 | 63 | 543 |
| B-9 | B-I | Eu | 0.048 | Si | 2.4 | 0.022 | 48 | 86 | 67 | 540 |
| B-10 | B-J | Yb | 0.047 | Si | 2.3 | 0.025 | 43 | 84 | 59 | 692 |
| B-11 | B-K | Al | 0.008 | Si | 2.6 | 0.026 | 41 | 86 | 53 | 547 |
| B-12 | B-L | Al | 0.148 | Si | 2.4 | 0.035 | 31 | 82 | 46 | 481 |
| B-13 | B-M | Al | 0.050 | Zr | 2.5 | 0.026 | 42 | 81 | 42 | 450 |
| B-14 | B-N | Al | 0.049 | Sn | 2.5 | 0.027 | 40 | 81 | 45 | 593 |
| B-15 | B-O | Al | 0.049 | Mg | 2.5 | 0.028 | 38 | 80 | 48 | 608 |
| B-16 | B-P | Al | 0.050 | Hf | 2.5 | 0.020 | 53 | 83 | 50 | 632 |
| B-17 | B-Q | Al | 0.049 | Si | 0.7 | 0.054 | 20 | 80 | 30 | 893 |
| B-18 | B-R | Al | 0.050 | Si | 11.4 | 0.012 | 93 | 89 | 68 | 352 |
| B-19 | B-S | Al | 0.050 | Si | 2.5 | 0.017 | 62 | 89 | 55 | 647 |
| B-20 | B-T | Al | 0.050 | Si | 2.5 | 0.051 | 21 | 75 | 22 | 145 |

Table 3-D

| Comparative Example No. | Ultrafine zinc oxide | Analysis of prepared substance | | | | Evaluation | | | | |
| | | Element having a valence number of three or more | | Metal compound | | Physical property | | Optical transmittance | | Electric resistivity |
| | | Element | Content mol/mol of ZnO | Element | mass % as oxide | Average primary particle diameter ($\mu$m) | BET specific surface area (m$^2$/g) | At 550 nm (%) | At 1900 nm (%) | Volume resistivity value ($\Omega$cm) |
|---|---|---|---|---|---|---|---|---|---|---|
| B-1 | B-U | Al | 0.0008 | Si | 2.6 | 0.027 | 40 | 83 | 82 | 35000 |
| B-2 | B-V | Al | 0.248 | Si | 2.3 | 0.045 | 24 | 59 | 57 | 581 |
| B-3 | B-W | Al | 0.050 | Si | 0.2 | 0.153 | 7 | 54 | 58 | 376 |
| B-4 | B-X | Al | 0.049 | Si | 23.5 | 0.007 | 148 | 89 | 81 | 1276 |
| B-5 | B-Y | Al | 0.050 | Si | 2.5 | 0.014 | 75 | 89 | 75 | 950 |
| B-6 | B-Z | Al | 0.050 | Si | 2.5 | 0.536 | 2 | 47 | 23 | 30 |
| B-7 | B-$\alpha$ | - | - | - | - | 0.021 | 50 | 89 | 89 | 22870000 |

(Analysis method B)

The composition of the ultrafine zinc oxides obtained in Examples B-1 to B-20 and Comparative Examples B-1 to B-7 was analyzed.

In 50 ml of pure water, each 0.2 g sample of the ultrafine zinc oxide was added. Then, hydrochloric acid (for analysis use) was further added thereto and mixed the mixture until it became a completely transparent solution. The obtained aqueous solution was transferred to a 100 ml measuring flask, and pure water was added in the flask to adjust the total volume to be 100 ml.

The obtained aqueous solution was analyzed by ICP emission spectrophotometer (SPS 1700 HVR model, Seiko Instruments Inc., Chiba, Japan). Using a previously produced analytical curve, the amount of the element having a valence number of 3 or more and the amount of the metal compound were determined. Then the determined amounts of the element or silica were converted by calculation to the amount relative to the amount of zinc oxide.

Table 3 illustrates the amounts of the element having a valence number of 3 or more represented by mol amount per mol of ZnO. The amounts of the metal compound are represented by mass% in the prepared substance.

(Evaluation Example B-1) - Evaluation of heat ray shielding ability in the form of thin film

The ultrafine zinc oxides obtained in the above-mentioned Examples B-1 to B-20 and Comparative Examples B-1 to B-7 was tested as follows.

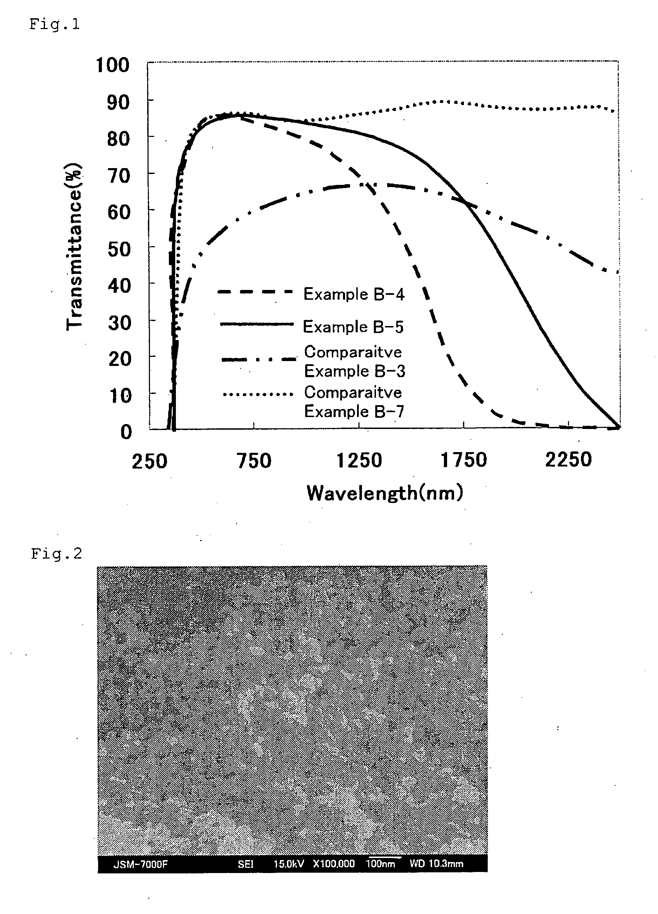

Each ultrafine zinc oxide-dispersed coating material was obtained by mixing 2.36 g of each ultrafine zinc oxide, 5.5 g of alkyd resin varnish (Beckosol J-524, Dainippon Ink and Chemicals, Inc., Tokyo, Japan), 2.8 g of melamine resin varnish (Super Beckamine J-820, Dainippon Ink and Chemicals, Inc.), and 5.7 g of xylene (Extra pure grade) and dispersing them together with 55 g of 0.8 mmφ zirconia beads using a paint conditioner over 180 minutes. Then, a small amount of the dispersion coating material was sampled on a glass plate and formed into a film using a No. 12 bar coater and successively baked at 130°C over 30 minutes to give each film for evaluation. The optical transmittance of the film for evaluation was measured by UV-VIS-NIR spectrophotometers (V-570 type spectrophotometer and ILN 471 type integration apparatus manufactured by JASCO Corp., Tokyo, Japan). The transmittance values at 550 nm and 1900 nm are illustrated in Table 3. Further, the optical transmittance spectrum curves of Examples B-4 and B-5 which had significant effect of the present invention and Comparative Examples B-3 and B-7 are illustrated in Fig. 1.

(Evaluation Example B-2) - Evaluation of volume resistivity value.

The volume resistivity values of ultrafine zinc oxides obtained in Examples B-1 to B-20 and Comparative Examples B-1 to B-7 were determined by the following method.

A cylinder made of vinyl chloride and having an inner diameter of 20 mmφ was loaded with 0.8 g of each sample and the sample was sandwiched between conductive cores having a function as electrodes in both sides and a load of 200 kgf was added to the sample by hand press. Keeping this state, the resistivity value between both ends of the electrodes was measured by a tester. The volume resistivity value was calculated from the resistivity value according to the following equation:

$$[\text{Volume resistivity value } (\Omega\text{cm})]$$
$$= [\text{resistivity value } (\Omega)] \times [\text{press surface area } (\text{cm}^2) \text{ of}$$
$$\text{sample}]/[\text{thickness } (\text{cm}) \text{ at the time of pressing}]$$

(Evaluation Example B-3) - Observation by scanning electron microscope

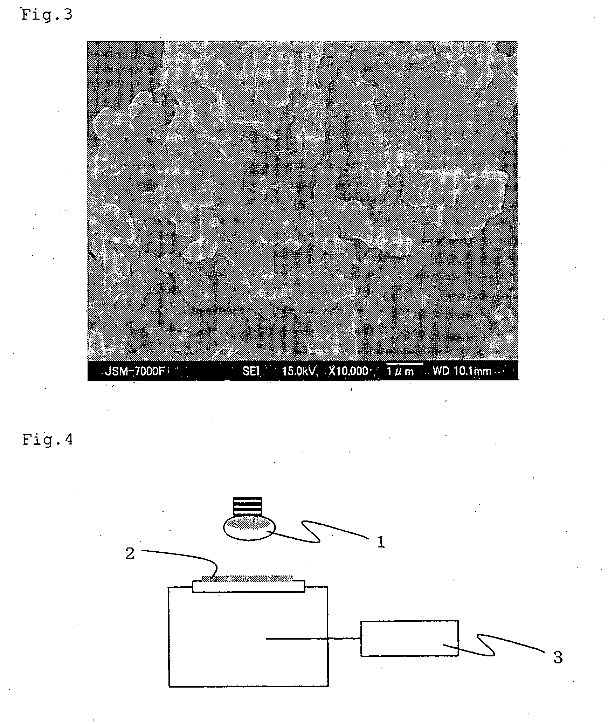

The ultrafine zinc oxides were observed by a scanning electron microscope (JSM-7000 F, JEOL Ltd., Tokyo, Japan). The transmission electron microscopic photographs of Example B-5 and Comparative Example B-3 are illustrated in Fig. 2 and Fig. 3.

(Evaluation Example B-4) - Temperature measurement

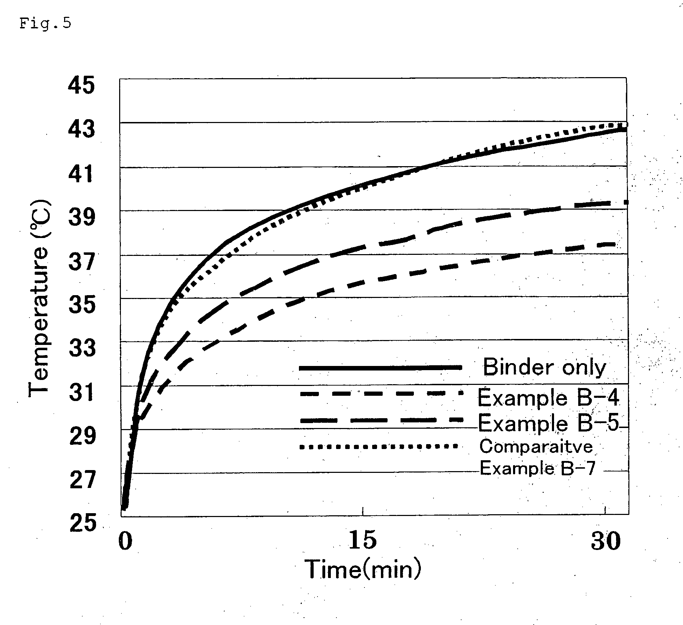

Each of the ultrafine zinc oxide-dispersed coating materials obtained in the method of Evaluation Example B-1 was sampled on a glass plate with a size of 10 cm × 12 cm and a thickness of 3 mm and formed into a film on the entire surface of one face using a No. 14 bar coater and baked at 130°C over 30 minutes to give each evaluation film. A 17 × 21 × 12.5 cm (depth × width × height) box, which insulates heat radiation to outside or reception from outside was used for evaluation. The center of the top face of the box was cut off in 9 cm square. The evaluation film was set on the cut off part of the top face of the box and an incandescent lamp was turned on at a distance of 12.5 cm above the evaluation film. The temperature was measured using a thermocouple set at a distance of 12.5 cm under the evaluation film. The schematic drawing of an apparatus is illustrated in Fig. 4. The relation of time from the turning on of the incandescent lamp and the temperature are illustrated in Fig. 5.

Table 3 shows the ultrafine zinc oxides of B-A to B-J obtained in Examples B-1 to B-10 have excellent properties, such as an average primary particle diameter of 0.1 $\mu$m or smaller, high visible light transmittance at 550 nm, and significantly low near infrared ray transmittance at 1900 nm, since they contained the elements having a valence number of 3 or more.

Table 3 further shows that all of the ultrafine zinc oxides of B-A to B-J have a volume resistivity value of 1000 $\Omega$cm or lower and accordingly also have good conductivity.

Table 1 shows that the ultrafine zinc oxides of B-K and B-L obtained in Examples B-11 and B-12, were, ultrafine zinc oxides having both of good near infrared ray shielding ability and conductivity as the same as the above case, even in the case of altering the content of Al, an element having a valence number of 3 or more. Table 1 also shows that the ultrafine zinc oxides of B-M to B-P obtained in Examples B-13 to B-16 were ultrafine zinc oxides having both of good near infrared ray shielding property and conductivity, as the same as the above case, even in the case of using various kinds of sintering-preventing components.

Table 1 further shows that the ultrafine zinc oxides of B-Q and B-R obtained in Examples B-17 and B-18 were ultrafine zinc oxides having both of good near infrared ray shielding property and conductivity, although the amounts of Si, a sintering-preventing component were altered. It was also true for the case of the ultrafine zinc oxides of B-S and B-T obtained in Examples B-19 and B-20, although the reducing firing temperatures were changed.

On the contrary, the ultrafine zinc oxide B-U obtained in Comparative Example B-1 was inferior in infrared ray shielding ability and a high volume resistivity value, although B-U contained Al as an element having a valence number of 3 or more. This is because the amount of Al was insufficient.

The ultrafine zinc oxide B-V obtained in Comparative Example B-2 showed decreased optical transmittance at 550 nm and high optical transmittance at 1900 nm. The reason why the properties were insufficient was assumed that the amount of Al as an element having a valence number of 3 or more was so high that excess Al was deposited in the grain boundaries and visible light was scattered. This resulted in inferior transparency and a low infrared ray shielding property.

The ultrafine zinc oxide B-W obtained in Comparative Example B-3 showed decreased of transmittance at 550 nm. The reason why the properties were insufficient was assumed that amount of Si as a sintering-preventing component is significantly low, and the particles were sintered to each other at the firing temperature applied in the present invention, and thus the particles were coarsened.

The ultrafine zinc oxide B-X obtained in Comparative Example B-4 showed insufficient infrared ray shielding ability, since the amount of Si, as a sintering-preventing component, was large and therefore, the proportion of zinc oxide containing an element having a valence number of 3 or more was lowered. The B-4 showed a high volume resistivity value, since surplus sintering preventing component Si insulated particles each other.

The ultrafine zinc oxide B-Y obtained in Comparative Example B-5 showed a low infrared ray shielding ability since the reducing firing temperature was low, and thus the element having a valence number of 3 or more were not sufficiently diffused in the zinc oxide crystal.

The ultrafine zinc oxide B-Z obtained in Comparative Example B-6 showed a large average primary particle diameter and a significantly low visible light transparency, since the reducing firing temperature was high. Therefore, even if the sintering-preventing agent was added, particles were sintered to each other and coarsened.

The ultrafine zinc oxide B-$\alpha$ of Comparative Example B-7 showed a high volume resistivity value, since it is pure zinc oxide and containing no element having a valence number of 3 or more. Thus, B-$\alpha$ has substantially no infrared ray shielding ability.

Further, Fig. 5 shows the results of temperature measurement with the lapse of time obtained by Evaluation Example B-4. In the case of a binder only and the evaluation film of Comparative Example B-7, the temperature was considerably increased since it has substantially no infrared ray shielding ability. On the contrary, in the case of Examples B-4 and B-5, it is apparent that the infrared ray shielding ability of the evaluation films, which were placed between the incandescent lamp as a heat source and the thermocouple, contributed to suppress the temperature increase.

INDUSTRIAL APPLICABILITY

An ultrafine zinc oxide obtained by a method of producing the ultrafine zinc oxide **produced by the method** of the present invention can be used for coating compositions, thermoplastic resin compositions, ink compositions and the like. A coating composition, thermoplastic resin composition, and ink composition provided by the present **disclosure** can be applied as an infrared ray shielding material and a conductive material to a substrate of glass or the like.

**Claims**

1. A method for producing an ultrafine zinc oxide containing an element having a valence number of 3 or more, the method comprising:

   - coating the surface of **either** a zinc oxide containing an element having a valence number of 3 or more, or a precursor compound of zinc oxide containing an element having a valence number of 3 or more, with a sintering-preventing component, and
   - firing the zinc oxide or the precursor compound at 600 to 850°C,

   wherein the an element having a valence number of 3 or more is selected from the group consisting of: In, Ga, Al, Sc, Y, Ti, B and lanthanides, **and wherein the precursor compound of zinc oxide is one that is converted into zinc oxide by firing,**
   wherein the sintering-preventing component is silica,
   wherein the amount of an element having a valence number of 3 or more is within the range of 0.001 to 0.2 mol per mol of zinc oxide and
   the amount of silica is within the range of 0.5 to 20 mass% as the mass proportion of $SiO_2$ in the surface-treated zinc oxide.

2. The method for producing the ultrafine zinc oxide according to claim 1 ,
   wherein the coating step involves combining an aqueous dispersion of a mixture of a zinc compound and an element having a valence number of 3 or more, with a basic compound containing a metal compound acting as a sintering-preventing component, and then neutralizing the mixture with an acid.

3. The method for producing the ultrafine zinc oxide according to claim **2,** wherein the basic compound is sodium silicate.


**Patentansprüche**

1. Verfahren zum Herstellen eines ultrafeinen Zinkoxids, das ein Element mit einer Valenzzahl von 3 oder mehr enthält, wobei das Verfahren umfasst:

   - Beschichten der Oberfläche von entweder einem Zinkoxid, das ein Element mit einer Valenzzahl von 3 oder mehr enthält, oder von einer Vorläuferverbindung des Zinkoxids, das ein Element mit einer Valenzzahl von 3 oder mehr enthält, mit einer Komponente, die ein Sintern verhindert, und
   - Brennen des Zinkoxids oder der Vorläuferverbindung bei 600 bis 850 °C, wobei das eine Element, das eine Valenzzahl von 3 oder mehr aufweist, aus der aus In, Ga, Al, Sc, Y, Ti, B und Lanthanoiden bestehenden Gruppe ausgewählt ist, und wobei die Vorläuferverbindung des Zinkoxids eine ist, die durch Brennen in Zinkoxid umgewandelt wird,

   wobei die Komponente, die ein Sintern verhindert, Silica ist,
   wobei der Gehalt eines Elementes mit einer Valenzzahl von 3 oder mehr innerhalb des Bereiches von 0,001 bis 0,2 mol pro mol Zinkoxid liegt, und
   der Gehalt des Silicas innerhalb des Bereiches von 0,5 bis 20 Massen-% als das Massenverhältnis von $SiO_2$ in dem oberflächenbehandelten Zinkoxid liegt.

2. Verfahren zum Herstellen des ultrafeinen Zinkoxids nach Anspruch 1,
   wobei der Beschichtungsschritt umfasst: Kombinieren einer wässrigen Dispersion einer Mischung aus einer Zinkverbindung und einem Element mit einer Valenzzahl von 3 mehr mit einer Basisverbindung, die eine Metallverbindung enthält, die als eine Komponente agiert, die ein Sintern verhindert, und dann Neutralisieren der Mischung mit einer Säure.

3. Verfahren zum Herstellen des ultrafeinen Zinkoxids nach Anspruch 2, wobei die Basisverbindung Natriumsilicat ist.


**Revendications**

1. Procédé de production d'un oxyde de zinc ultrafin contenant un élément ayant un nombre de valence de 3 ou supérieur, le procédé comprenant :

- le revêtement de la surface soit d'un oxyde de zinc contenant un élément ayant un nombre de valence de 3 ou supérieur, soit d'un composé précurseur d'oxyde de zinc contenant un élément ayant un nombre de valence de 3 ou supérieur, avec un constituant de prévention de frittage, et
- la cuisson de l'oxyde de zinc ou du composé de précurseur à de 600 à 850°C,

dans lequel le un élément ayant un nombre de valence de 3 ou supérieur est choisi dans le groupe constitué de : In, Ga, Al, Sc, Y, Ti, B et des lanthanides, et dans lequel le composé de précurseur d'oxyde de zinc est un qui est converti en oxyde de zinc par cuisson,
dans lequel le constituant de prévention de frittage est la silice,
dans lequel la quantité d'un élément ayant un nombre de valence de 3 ou supérieur se trouve dans l'intervalle de 0,001 à 0,2 mole par mole d'oxyde de zinc et
la quantité de silice se trouve dans l'intervalle de 0,5 à 20 % en masse comme la proportion massique de $SiO_2$ dans l'oxyde de zinc traité en surface.

2.  Procédé de production de l'oxyde de zinc ultrafin selon la revendication 1, dans lequel l'étape de revêtement implique la combinaison d'une dispersion aqueuse d'un mélange d'un composé de zinc et d'un élément ayant un nombre de valence de 3 ou supérieur, avec un composé basique contenant un composé de métal agissant comme un constituant de prévention de frittage, et la neutralisation subséquente du mélange avec un acide.

3.  Procédé de production de l'oxyde de zinc ultrafin selon la revendication 2, dans lequel le composé basique est le silicate de sodium.

Fig.1

Fig.2

Fig.3

JSM-7000F    SEI    15.0kV    X10,000    1 μm    WD 10.1mm

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57059748 A
- JP 57059749 A
- JP 3072011 B
- JP 4000929 B
- JP 5006766 B
- JP 4160037 A
- JP 5126650 A
- JP 7291680 A
- JP 10310759 A
- JP 8281860 A
- JP 2000186237 A
- JP 2004124033 A
- JP 5319808 A
- EP 1112964 A1
- US 2006167138 A1

**Non-patent literature cited in the description**

- **SHANGFENG DU.** Calcination Effects on the Properties of Gallium-Doped Zinc Oxide Powders. *J. Am. Ceram. Soc.,* 2006, vol. 89 (8), 2440-2443